# DEMANDE DE BREVET EUROPEEN

(11) **EP 4 752 606 A1**
(43) Date de publication de la demande: **03.06.2026**
(21) Numéro de dépôt: 25217839.7
(22) Date de dépôt: 21.11.2025
(51) Int. Cl.: G02B 3/00, G02B 3/04, G02B 19/00

(54) **DISPOSITIF LUMINEUX AVEC ÉLÉMENT DE DIFFUSION À SURFACE TEXTURÉ**

(30) Priorité: 27.11.2024 FR 2413080
(71) Demandeur: Trato Industries, 59100 Roubaix (FR)
(72) Inventeur: TAILLEZ, Gaëtan, 59520 Marquette-lez-Lille (FR)
(74) Mandataire: Germain Maureau

(57) **Abrégé**

L'invention concerne un dispositif lumineux (1) configuré pour émettre une lumière, le dispositif lumineux (1) comprenant un élément optoélectronique configuré pour agir comme une source lumineuse, et une lentille optique (3) configuré pour s'étendre au moins en partie en regard de l'élément optoélectronique. La lentille optique (3) comprend un profil de base et une surface texturée (9) comprenant une pluralité d'éléments faisant saillie du profil de base. La surface texturée (9) est configurée pour correspondre au résultat d'une projection uni-axiale d'un réseau de motifs de base plan, et chacun des motifs de base, avant projection uni-axiale, est une partie de surface de révolution.

## Description

### Domaine technique

La présente invention concerne le domaine de l'optique, et en particulier les dispositifs lumineux configurés pour l'éclairage industriel, commercial ou d'habitation.

### Etat de la technique

Il est connu de l'art antérieur d'utiliser un dispositif lumineux configuré pour émettre une lumière, comprenant un élément optoélectronique et configuré pour émettre des rayons lumineux, et une lentille optique formée dans une matière transparente pour lesdits rayons lumineux et s'étendant au moins en partie dans le champ des rayons lumineux émis par l'élément optoélectronique. Plus spécifiquement, l'élément optoélectronique utilisé généralement dans de tels dispositifs lumineux est une diode électroluminescente dite « moyenne-puissance » (aussi connue sous le nom de LED midpower) en raison des coûts limités et de l'efficacité lumineuse inhérents à cette technologie. Par « moyenne-puissance », il est entendu une diode électroluminescente conçue pour fonctionner entre 0.2 et 0.5 watt.

Ce type de dispositif lumineux est particulièrement performant car il permet de générer une lumière dans un espace défini tout en étant de conception basique. Cependant, un tel dispositif présente un inconvénient majeur qui réside dans la non-uniformité et la non-homogénéité de la distribution colorimétrique de la lumière émise par le dispositif lumineux. En effet, la lumière émise par l'élément optoélectronique sur sa surface d'émission ne présente pas une couleur uniforme et homogène, ladite couleur varie sensiblement en fonction de l'angle d'observation. Ces écarts colorimétriques se retrouvent par conséquent dans la lumière émise par un tel dispositif lumineux, et sont par ailleurs fréquemment amplifiés par la lentille optique du fait de la canalisation de la lumière par cette dernière.

En outre, il est connu d'utiliser une pigmentation de la lentille optique ou encore d'effectuer un traitement de surface de la lentille optique afin de limiter les effets indésirables liés à l'utilisation de diode électroluminescente « moyenne-puissance », cependant, de tels techniques engendrent une part d'aléatoire dans le comportement optique de la lentille optique. Cette part d'aléatoire provient à la fois du comportement optique de diffusion d'une pigmentation ou d'un traitement de surface, mais aussi de la maîtrise limitée du processus de pigmentation ou de traitement de surface, ainsi que de la répétabilité du résultat obtenu. Il en résulte une dégradation de la distribution lumineuse et l'apparition d'un éblouissement pouvant être gênant pour un utilisateur.

### Résumé de l'invention

Le problème technique à la base de l'invention consiste donc à fournir un dispositif lumineux conformé pour générer un flux lumineux dont la distribution colorimétrique est uniforme, et dont la déviation est maitrisée, qui soit de structure simple, compacte et économique.

A cet effet, la présente invention concerne un dispositif lumineux configuré pour émettre une lumière, le dispositif lumineux comprenant un élément optoélectronique, telle qu'une diode électroluminescente (également appelée LED) par exemple, et configuré émettre des rayons lumineux, et une lentille optique comprenant une surface d'entrée et une surface de sortie, la lentille optique étant formée dans une matière transparente pour lesdits rayons lumineux et s'étendant au moins en partie dans le champ des rayons lumineux émis par l'élément optoélectronique ;
dans lequel la surface de sortie comprend un profil de base de forme gauche et une surface texturée comprenant une pluralité d'éléments optiques agencés en saillie du profil de base, ladite surface texturée étant conformée dans l'espace pour correspondre au résultat d'une projection uni-axiale selon un axe de projection, sur le profil de base, d'un réseau de motifs de base, répartis dans un plan de base orienté transversalement à l'axe de projection, chacun des motifs de base étant conformé selon tout ou partie de surface de révolution. Par surface de révolution, il est entendu une surface tridimensionnelle générée par la rotation d'une courbe génératrice autour d'un axe de révolution.

Par « profil de base de forme gauche », il est entendu une surface tridimensionnelle qui ne peut pas être développée sur un plan sans subir de déformation, comme un étirement ou une compression.

Une telle configuration de l'invention permet d'obtenir une uniformité dans la distribution colorimétrique tout en supprimant la part d'aléatoire dans le comportement optique, donc en limitant le risque d'éblouissement pour l'utilisateur. En outre, les caractéristiques spécifiques de la surface texturée permettent de générer une pièce sans contre-dépouille, ce qui permet de réaliser facilement une telle pièce par moulage. Par ailleurs, une telle configuration du dispositif lumineux permet d'obtenir un rendu colorimétrique homogène avec une seule couleur visible par un utilisateur, la lentille optique permettant de « mélanger » les différentes teintes colorimétriques par l'élément optoélectronique. En effet, l'utilisation de diode électroluminescente présente l'inconvénient de présenter une pluralité de couleur allant du jaune au blanc en fonction des différentes zones d'émissions présentes sur la surface de la diode électroluminescente.

Le dispositif lumineux peut en outre présenter une ou plusieurs des caractéristiques suivantes, qui peuvent être prises seules ou en combinaison.

Selon un mode de réalisation de l'invention, la surface d'entrée est configurée pour s'étendre en regard de l'élément optoélectronique.

Selon un mode de réalisation de l'invention, le dispositif lumineux comporte en outre une partie de support configurée pour s'étendre selon un plan d'extension, l'élément optoélectronique et la lentille optique étant respectivement configurés pour être solidaire avec la partie de support.

Selon un mode de réalisation de l'invention, le plan de base et le plan d'extension sont parallèles.

Selon un mode de réalisation de l'invention, l'élément optoélectronique est fixé sur un support électronique, tel qu'un circuit imprimé, lequel est fixé sur la partie de support.

Selon un mode de réalisation de l'invention, la projection uni-axiale est le résultat d'une projection du réseau de motifs de base transversalement au plan d'extension, ledit plan d'extension étant confondu avec une surface d'extrémité sur lequel la lentille optique est fixée.

Selon un mode de réalisation de l'invention, le profil de base de la lentille optique présente une forme sensiblement de dôme.

Selon un mode de réalisation de l'invention, la lentille optique présente une forme sensiblement hémisphérique.

Selon un mode de réalisation de l'invention, la lentille optique est monobloc.

Selon un mode de réalisation de l'invention, la lentille optique est réalisée dans un matériau plastique transparent de sorte que la lentille optique est fabriquée par injection de plastique (par exemple en polycarbonate ou en Polyméthacrylate de méthyle) ou injection de silicone dans un moule prévu à cet effet.

Selon un mode de réalisation de l'invention, la lentille optique est réalisée en polycarbonate. Une telle configuration de la lentille optique permet de résister aux températures de fonctionnement du dispositif lumineux, lesquelles peuvent atteindre les 70°C.

Selon un mode de réalisation de l'invention, la lentille optique comprend un évidement interne définissant, avec la partie de support, un volume interne, l'élément optoélectronique étant prévu pour s'étendre au moins en partie à l'intérieur dudit volume interne.

Selon un mode de réalisation de l'invention, le réseau de motifs de base comprend une pluralité de premiers motifs répartis dans le plan de base selon un arrangement matriciel.

Selon un mode de réalisation de l'invention, chacun des premiers motifs de la pluralité de premiers motifs est adjacent avec au moins l'un des autres premiers motifs de la pluralité de premiers motifs.

Selon un mode de réalisation de l'invention, chacun des premiers motifs de la pluralité de premiers motifs est identique.

Selon un mode de réalisation de l'invention, chacun des premiers motifs présente une hauteur, mesurée perpendiculairement au plan de base, comprise entre 40 µm et 80 µm, avantageusement compris entre 50 µm et 70 µm, et préférentiellement de 63 µm.

Selon un mode de réalisation de l'invention, chacun des premiers motifs présente la forme d'une partie de sphère, également appelée calotte sphérique. En d'autres termes, la courbe génératrice de chacun des premiers motifs est un arc de cercle. Par calotte sphérique, on entend une portion de sphère délimitée par un plan.

Selon un autre mode de réalisation de l'invention, chacun des premiers motifs présente la forme d'un paraboloïde de révolution. En d'autres termes, la courbe génératrice de chacun des premiers motifs est une parabole.

Selon un mode de réalisation de l'invention, chacun des premiers motifs présente un diamètre compris entre 0.15 mm et 0.6 mm, avantageusement compris entre 0.3 mm et 0.5 mm, et préférentiellement de 0.4 mm. Une telle configuration de l'invention permet d'augmenter la déviation de la lumière émise par l'élément optoélectronique tout en évitant le phénomène de réflexion de la lumière.

Selon un mode de réalisation de l'invention, la surface de l'élément optoélectronique, mesurée parallèlement au plan d'extension, est comprise entre 7.5 mm² et 11.5 mm², avantageusement compris entre 8.5 mm² et 10.5 mm², et est préférentiellement de 9.5 mm². Une telle configuration de l'invention permet d'éviter les premiers motifs ne soient visibles, pour un utilisateur, dans le flux lumineux généré par le dispositif lumineux.

Selon un mode de réalisation de l'invention, le réseau de motifs de base comprend une pluralité de deuxièmes motifs selon un arrangement matriciel, chacun des deuxièmes motifs de la pluralité de deuxièmes motifs étant intercalé entre les premiers motifs. En d'autres termes, les deuxièmes motifs sont prévus dans les zones vides de l'arrangement matriciel de premiers motifs.

Selon un mode de réalisation de l'invention, chaque deuxième motif de la pluralité de deuxièmes motifs est adjacent, et par exemple contiguë, avec quatre premiers motifs de la pluralité de premiers motifs. Une telle configuration de l'invention permet avantageusement de maximiser le remplissage de la surface texturée, ce qui a pour avantage d'améliorer encore la déviation de la lumière produite par le dispositif lumineux.

Selon un mode de réalisation de l'invention, chacun des deuxièmes motifs présente une hauteur, mesurée perpendiculairement au plan de base, comprise entre 4 µm et 16 µm, avantageusement compris entre 6 µm et 12 µm, et préférentiellement de 10 µm.

Selon un mode de réalisation de l'invention, chacun des deuxièmes motifs présente la forme d'une partie de sphère, également appelée calotte sphérique. En d'autres termes, la courbe génératrice de chacun des deuxièmes motifs est un arc de cercle.

Selon un mode de réalisation de l'invention, chacun des deuxièmes motifs présente un diamètre compris entre 120 µm et 200 µm, avantageusement compris entre 140 µm et 180 µm, et préférentiellement de 165 µm. Une telle configuration de l'invention permet d'obtenir un rayon de courbure de la partie de sphère qui est identique entre les premiers motifs et les deuxièmes motifs, ce qui permet avantageusement de simplifier et de réduire les couts liés à l'usinage du moule permettant de créer la lentille optique.

Selon un autre mode de réalisation de l'invention, chacun des deuxièmes motifs présente la forme d'un paraboloïde de révolution. En d'autres termes, la courbe génératrice de chacun des deuxièmes motifs est une parabole.

Selon un mode de réalisation de l'invention, la lentille optique est conformée de sorte à présenter deux sous-parties ayant des formes tridimensionnelles identiques, agencées de part et d'autre d'une délimitation centrale de la lentille optique qui s'étend dans un plan longitudinal. Une telle configuration du dispositif lumineux permet d'obtenir une lentille à double asymétrie configurée avantageusement pour élargir le flux lumineux généré par le dispositif lumineux, ceci en évitant de projeter un flux lumineux « carrée » au profit d'un flux lumineux plus large dont l'utilisation dans un éclairage industriel est préférable afin de ne pas éblouir l'utilisateur par exemple. Plus particulièrement, une telle configuration de la lentille optique permet d'éclairer de chaque de chaque côté de la délimitation centrale, et par exemple d'éclairer prioritairement des rayonnages situés de part et d'autre du dispositif lumineux.

Selon un mode de réalisation de l'invention, le plan longitudinal de la lentille optique définit un premier plan de symétrie de la surface texturée et des deux sous-parties.

Selon un mode de réalisation de l'invention, la lentille optique est conformée de sorte à présenter un plan transversal de symétrie coupant transversalement le plan longitudinal et passant par un centre géométrique de la lentille optique. Avantageusement, le plan transversal définit un deuxième plan de symétrie de la lentille optique, la surface texturée étant symétrique de part et d'autre du deuxième plan de symétrie sur chacune des sous-parties. Une telle configuration de la lentille optique permet en outre un gain de temps lors de la modélisation et du traitement informatique permettant de générer la surface texturée.

Selon un mode de réalisation de l'invention, le dispositif lumineux comporte un traitement de surface, tel qu'un grainage par exemple, localisé dans une zone périphérique de la lentille optique. Une telle configuration de l'invention permet de palier au faible relief de la surface texturée dans la zone périphérique de la lentille optique, et permet ainsi d'accroitre localement la diffusion de la lumière générée par l'élément optoélectronique.

Selon un mode de réalisation de l'invention, la lentille optique est obtenue par moulage.

Selon un mode de réalisation de l'invention, le moule utilisé pour le moulage de la lentille optique comporte l'empreinte négative de la surface texturée.

Selon un mode de réalisation de l'invention, l'invention concerne un ensemble lumineux comportant une pluralité de dispositifs lumineux.

Selon un mode de réalisation de l'invention, l'ensemble lumineux comporte un socle mécanique configuré pour fixer mécaniquement chaque dispositif lumineux et configuré pour autoriser une alimentation électrique des éléments optoélectronique composant l'ensemble lumineux. Avantageusement, la pluralité de dispositifs lumineux est arrangée selon un axe d'extension sensiblement horizontal lorsque l'ensemble lumineux occupe une configuration d'utilisation.

A défaut de stipulation contraire, le terme « sensiblement » signifie, dans le présent document, « exactement ou à 10% ou à 10° près ».

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
Figure 1 est une vue en perspective d'un dispositif lumineux selon un premier mode de réalisation de l'invention ;
Figure 2 est une représentation schématique en coupe d'un profil de base de la figure 1 après application d'un réseau de motifs de base ;
Figure 3 est une représentation schématique de dessus du profil de base de la figure 2 ;
Figure 4 est une vue en en perspective du profil de base de la figure 3 ;
Figure 5 est une représentation schématique en coupe du dispositif lumineux selon le premier mode de réalisation de l'invention ;
Figure 6 est une vue en perspective d'un dispositif lumineux selon un deuxième mode de réalisation de l'invention ;
Figure 7 est une représentation schématique en coupe du dispositif lumineux selon le premier mode de réalisation de l'invention ;
Figure 8 est une représentation de la dispersion des rayons lumineux émis par le dispositif lumineux selon le deuxième mode de réalisation de l'invention ;
Figure 9 est une représentation schématique des rayons lumineux émis par un élément optoélectronique du dispositif lumineux de la figure 6 ;
Figure 10 est une représentation schématique vue de dessus d'un ensemble lumineux comportant une pluralité de dispositifs lumineux selon un premier mode de réalisation ;
Figure 11 est une représentation schématique vue de dessus d'un ensemble lumineux comportant une pluralité de dispositifs lumineux selon un deuxième mode de réalisation.

### Description détaillée

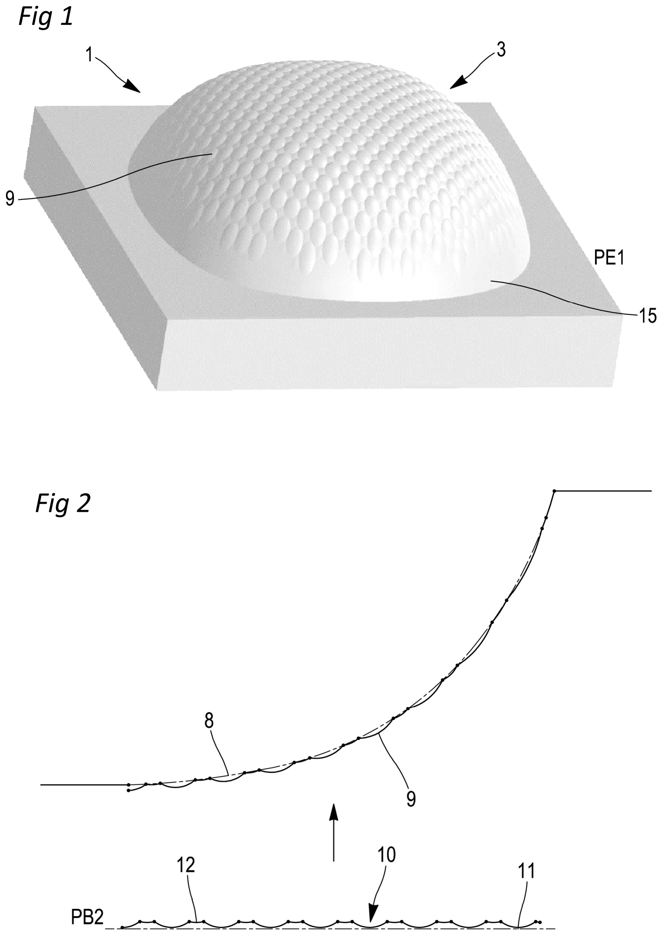

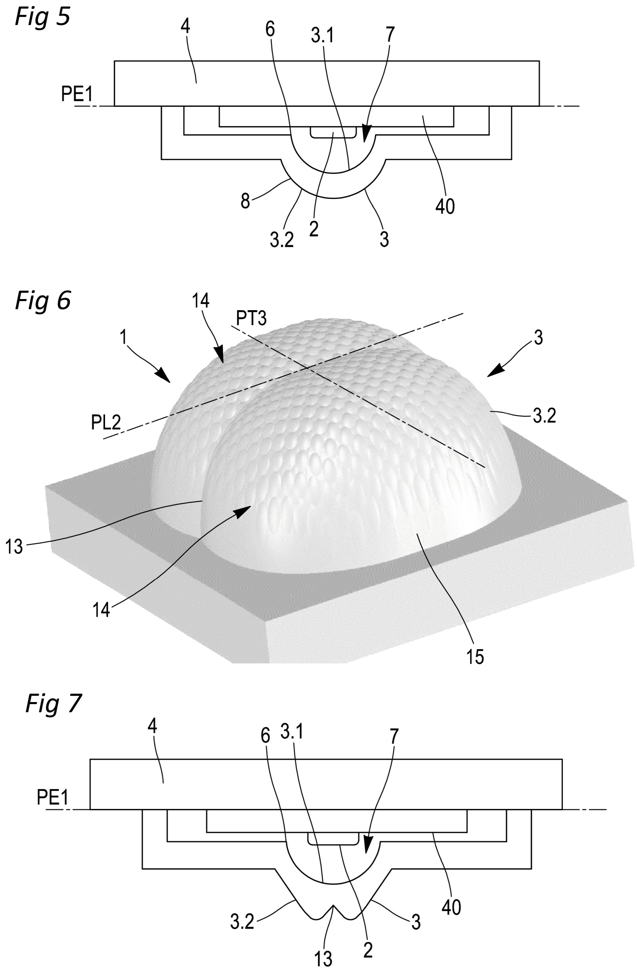

Les figures 1 à 5 représentent tout ou partie d'un dispositif lumineux 1 configuré pour émettre une lumière selon un premier mode de réalisation de l'invention. Le dispositif lumineux 1 comprend un élément optoélectronique 2, une lentille optique 3, et une partie de support 4 configurée pour s'étendre selon un plan d'extension PE1, l'élément optoélectronique 2 et la lentille optique 3 étant respectivement configurés pour être solidaire avec la partie de support 4. Plus particulièrement, l'élément optoélectronique 2 est fixé sur un support électronique 40, tel qu'un circuit imprimé, lequel est fixé sur la partie de support 4 (voir figure 5).

La lentille optique 3 comprend une surface d'entrée 3.1 et une surface de sortie 3.2 ; ainsi qu'un évidement interne 6 définissant, avec la partie de support 4, un volume interne 7. L'élément optoélectronique 2 est prévu pour s'étendre au moins en partie à l'intérieur dudit volume interne 7.

Selon le premier mode de réalisation de l'invention, l'élément optoélectronique 2 est une diode électroluminescente également appelée LED. Un tel élément optoélectronique 2 est traditionnellement utilisé pour agir comme une source lumineuse et émettre des rayons lumineux dans les dispositifs lumineux 1 en raison de son faible coût de production ainsi que de sa consommation électrique maitrisée dans des applications industrielle, commerciale ou domestique.

Selon le premier mode de réalisation de l'invention, la lentille optique 3 est formée dans une matière transparente pour lesdits rayons lumineux émis par l'élément optoélectronique 2. En outre la surface d'entrée 3.1 est configurée pour s'étendre au moins en partie en regard de l'élément optoélectronique 2.

La lentille optique 3 comprend un profil de base 8 (voir figure 2) de forme gauche, et une surface texturée 9 comprenant une pluralité d'éléments optiques agencés en saillie du profil de base 8. La surface texturée 9 est conformée dans l'espace pour correspondre au résultat d'une projection uni-axiale selon un axe de projection AP1, sur le profil de base 8, d'un réseau de motifs de base 10 répartis dans un plan de base PB2 (voir figure 2) orienté transversalement à l'axe de projection AP1, chacun des motifs de base 10 étant conformé selon tout ou partie d'une surface de révolution. Par surface de révolution, il est entendu une surface tridimensionnelle générée par la rotation d'une courbe génératrice autour d'un axe de révolution. Plus particulièrement, la projection uni-axiale est le résultat d'une projection du réseau de motifs de base 10 transversalement au plan d'extension PE1, ledit plan d'extension PE1 étant confondu avec une surface d'extrémité sur lequel la lentille optique 3 est fixée.

Une telle configuration de l'invention permet d'obtenir une uniformité dans la distribution colorimétrique et une déviation efficace de la lumière émise par l'élément optoélectronique 2 quel que soit l'angle d'observation pour un utilisateur. En outre, les caractéristiques spécifiques de la surface texturée 9 permettent de générer une pièce sans contre-dépouille, ce qui permet de réaliser facilement une telle pièce par moulage. Par ailleurs, une telle configuration du dispositif lumineux 1 permet d'obtenir un rendu colorimétrique homogène avec une seule couleur visible par l'utilisateur, la lentille optique 3 permettant de « mélanger » les différentes teintes colorimétriques émises par l'élément optoélectronique. En effet, l'utilisation de diode électroluminescente présente l'inconvénient de présenter une pluralité de couleur perçues comme allant du jaune au blanc en fonction des différentes zones d'émissions présentes sur la surface de la diode électroluminescente.

La lentille optique 3 est réalisé dans un matériau plastique transparent, tel que le polycarbonate par exemple, de telle sorte que la lentille optique 3 est fabricable par injection de plastique (par exemple en polycarbonate ou en Polyméthacrylate de méthyle) ou injection de silicone dans un moule prévu à cet effet. Comme visible plus spécifiquement sur la figure 1, la lentille optique 3 présente une forme sensiblement de dôme et est monobloc. La réalisation de la lentille optique 3 en polycarbonate permet par exemple de résister aux températures de fonctionnement du dispositif lumineux 1, lesquelles peuvent atteindre les 70°C.

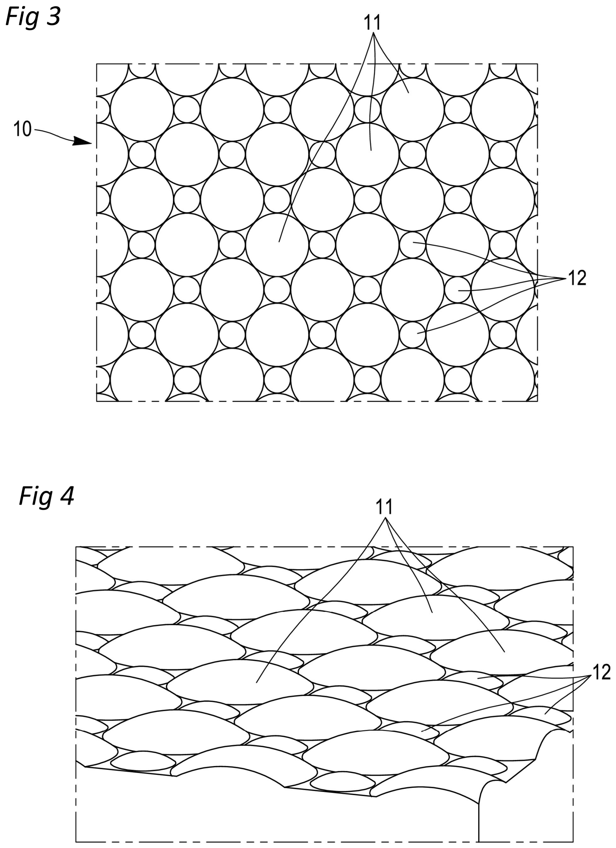

Avantageusement, et comme représenté plus particulièrement sur les figures 3 et 4, le réseau de motifs de base 10 comprend une pluralité de premiers motifs 11 répartis dans le plan de base selon un arrangement matriciel. Chacun des premiers motifs 11 de la pluralité de premiers motifs 11 sont adjacent, et sont plus spécifiquement contiguës (voir figure 3) avec au moins l'un des autres premiers motifs 11 de la pluralité de premiers motifs 11.

Les premiers motifs 11 de la pluralité de premiers motifs 11 sont tous identiques et présentent une hauteur, mesurée perpendiculairement au plan de base, comprise entre 40 µm et 80 µm, avantageusement compris entre 50 µm et 70 µm, et par exemple de 63 µm selon le premier mode de réalisation de l'invention. En outre, chacun des premiers motifs 11 présente la forme d'une partie de sphère, c'est à dire une portion de sphère délimitée par un plan. Ainsi, chacun des premiers motifs 11 présente un diamètre compris entre 0.15 mm et 0.6 mm, avantageusement compris entre 0.3 mm et 0.5 mm, et est de 0.4 mm selon le premier mode de réalisation de l'invention. Une telle configuration de l'invention permet d'augmenter la déviation de la lumière émise par l'élément optoélectronique 2 tout en évitant le phénomène de réflexion de la lumière.

Avantageusement, la surface de l'élément optoélectronique 2, mesurée parallèlement au plan d'extension, est comprise entre 7.5 mm² et 11.5 mm², avantageusement compris entre 8.5 mm² et 10.5 mm², et est préférentiellement de 9.5 mm². Une telle configuration de l'invention permet d'éviter les premiers motifs 11 ne soient visibles, pour un utilisateur, dans le flux lumineux généré par le dispositif lumineux 1.

Comme visible plus spécifiquement sur les figures 3 et 4, le réseau de motifs de base 10 comprend une pluralité de deuxièmes motifs 12. Les deuxièmes motifs 12 sont également répartis dans le plan de base selon un arrangement matriciel et sont intercalés entre chacun des premiers motifs 11. En d'autres termes, les deuxièmes motifs 12 sont prévus dans les zones vides de l'arrangement matriciel de premiers motifs 11.

Selon le premier mode de réalisation de l'invention représenté sur les figures, chaque deuxième motif 12 de la pluralité de deuxièmes motifs 12 est adjacent, et par exemple contiguë, avec quatre premiers motifs 11 de la pluralité de premiers motifs 11. Une telle configuration de l'invention permet avantageusement de maximiser le remplissage de la surface texturée 9, ce qui a pour avantage d'améliorer encore la déviation de la lumière produite par le dispositif lumineux 1.

Les deuxièmes motifs 12 présentent des dimensions identiques, dont la hauteur, mesurée perpendiculairement au plan de base, est comprise entre 4 µm et 16 µm, avantageusement compris entre 6 µm et 12 µm, et préférentiellement de 10 µm.

En outre, chacun des deuxièmes motifs 12 présente la forme d'une partie de sphère dont le diamètre est compris entre 120 µm et 200 µm, avantageusement compris entre 140 µm et 180 µm, et préférentiellement de 165 µm. Une telle configuration de l'invention permet d'obtenir un rayon de courbure de la partie de sphère qui est identique entre les premiers motifs 11 et les deuxièmes motifs 12, ce qui permet avantageusement de simplifier et de réduire les couts liés à l'usinage du moule permettant de créer la lentille optique 3.

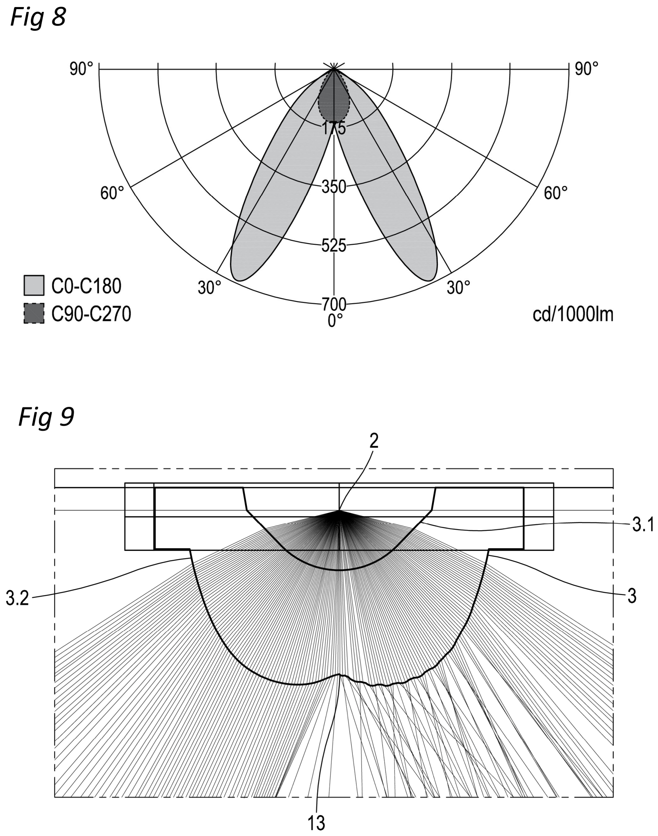

Les figures 6 à 9 représente un dispositif lumineux 1 selon un deuxième mode de réalisation, lequel diffère du premier mode de réalisation de l'invention essentiellement en ce que la lentille optique 3 est conformée de sorte à présenter une délimitation centrale 13, telle qu'une gorge ou un sillon par exemple, qui s'étend dans un plan longitudinal PL2. La lentille optique 3 comporte deux sous-parties 14 ayant des formes tridimensionnelles identiques, agencées de part et d'autre de la délimitation centrale 13. Une telle configuration du dispositif lumineux 1 permet d'obtenir une distribution lumineuse dite double asymétrique (voir figure 8) laquelle est avantageusement configurée pour diriger le flux lumineux de chaque côté du dispositif lumineux 1 avec un angle sensiblement compris entre 25° et 35° par rapport à un axe vertical coupant transversalement le dispositif lumineux 1. Une telle distribution du flux lumineux permet, lorsque le dispositif lumineux 1 est placé dans l'axe d'une allée de circulation, d'éclairer prioritairement des éléments prévus de part et d'autre du dispositif lumineux 1, tels que des rayonnages par exemple.

Ce type d'éclairage, dans un environnement de type commerce, logistique, ou industriel, permet un usage plus rationnel de la lumière, et donc de l'énergie mise en œuvre, ainsi qu'une mise en valeur des éléments éclairés par un contraste lumineux plus élevé, le sol étant peu éclairé. De même, une telle configuration de l'invention permet d'améliorer le confort de l'utilisateur.

En outre, la figure 9 permet une visualisation schématique des rayons lumineux émis par l'élément optoélectronique 2 équipant le dispositif lumineux 1. Plus précisément, la partie droite de la figure 9 représente schématiquement le comportement desdits rayons lumineux lorsqu'ils traversent les éléments optiques agencés sur la surface de sortie de la lentille optique 3, tandis que la partie gauche de la figure 9 représente le comportement des rayons lumineux lorsqu'ils traversent une surface sortie non-texturée.

Avantageusement, le plan longitudinal PL2 de la lentille optique 3 permet de définir un premier plan de symétrie de la surface texturée 9 et des deux sous-parties 14. La lentille optique 3 est conformée de sorte à présenter un plan transversal PT3 de symétrie coupant transversalement le plan longitudinal PL2 et passant par un centre géométrique de la lentille optique 3 ; ceci afin de définir un deuxième plan de symétrie. Ainsi, la surface texturée 9 est symétrique de part et d'autre du deuxième plan de symétrie sur chacune des sous-parties 14. Une telle configuration de la lentille optique 3 permet en outre un gain de temps lors de la modélisation et du traitement informatique permettant de générer la surface texturée 9.

Selon un autre mode de réalisation de l'invention non représenté sur les figures, le dispositif lumineux 1 comporte un traitement de surface, tel qu'un grainage par exemple, localisé dans une zone périphérique 15 de la lentille optique 3, et par exemple dans une zone adjacente à la partie de support 4. Une telle configuration de l'invention permet de palier au faible relief de la surface texturée 9 dans la zone périphérique de la lentille optique 3, et permet ainsi d'accroitre localement la diffusion de la lumière générée par l'élément optoélectronique 2.

Selon une variante du premier et du deuxième mode de réalisation de l'invention (non représentée sur les figures), chacun des premiers motifs 11 et/ou des deuxièmes motifs 12 peuvent présenter la forme d'un paraboloïde de révolution. En d'autres termes, la courbe génératrice de chacun des premiers motifs 11 et / ou des deuxièmes motifs 12 est une parabole. Une telle configuration de l'invention permet encore de modifier la diffusion des rayons lumineux émis par l'élément optoélectronique 2.

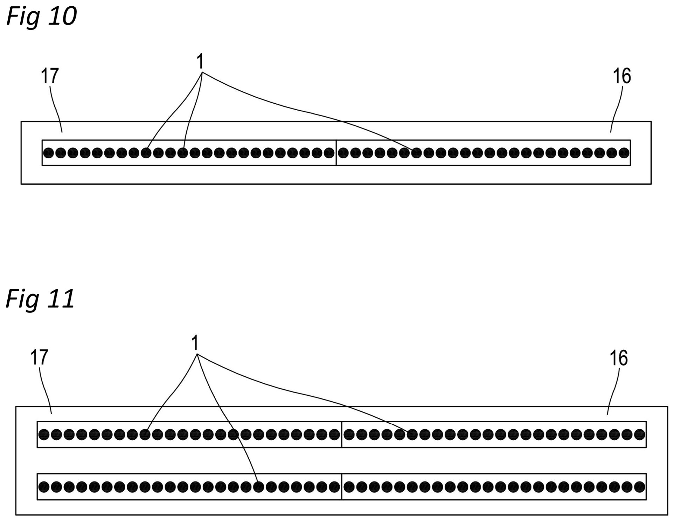

L'invention concerne en outre un ensemble lumineux 16 (représenté sur les figures 10 et 11) et comportant une pluralité de dispositifs lumineux 1 selon le premier ou le deuxième mode de réalisation de l'invention. Un tel ensemble lumineux 16 comporte une quantité de dispositif lumineux 1 qui est adapté à la puissance lumineuse souhaitée, lesdits dispositifs lumineux 1 socle mécanique 17 configuré pour fixer mécaniquement chaque dispositif lumineux 1 et configuré pour autoriser une alimentation électrique des éléments optoélectronique 2 qui composent l'ensemble lumineux. Avantageusement, la pluralité de dispositifs lumineux 1 est arrangée selon un axe d'extension sensiblement horizontal lorsque l'ensemble lumineux occupe une configuration d'utilisation. La pluralité de dispositifs lumineux 1 peut être arrangée de façon pseudo-linéaire (voir figure 10), ou encore de façon matricielle (voir figure 11) en fonction de l'effet escompté.

Bien entendu, la présente invention n'est nullement aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Dispositif lumineux (1) configuré pour émettre une lumière, le dispositif lumineux (1) comprenant un élément optoélectronique (2) configuré pour émettre des rayons lumineux, et une lentille optique (3) comprenant une surface d'entrée (3.1) et une surface de sortie (3.2), la lentille optique (3) étant formée dans une matière transparente pour lesdits rayons lumineux et s'étendant au moins en partie dans le champ des rayons lumineux émis par l'élément optoélectronique (2) ;
dans lequel la surface de sortie (3.2) comprend un profil de base (8) de forme gauche et une surface texturée (9) comprenant une pluralité d'éléments optiques agencés en saillie du profil de base (8), ladite surface texturée (9) étant conformée dans l'espace pour correspondre au résultat d'une projection uni-axiale selon un axe de projection (AP1), sur le profil de base (8), d'un réseau de motifs de base (10), répartis dans un plan de base (PB2) orienté transversalement à l'axe de projection (AP1), chacun des motifs de base (10) étant conformé selon tout ou partie d'une surface de révolution.

2. Dispositif lumineux (1) selon la revendication 1, dans lequel le profil de base (8) de la lentille optique (3) présente une forme sensiblement de dôme.

3. Dispositif lumineux (1) selon la revendication 1 ou la revendication 2, dans lequel le réseau de motifs de base (10) comprend une pluralité de premiers motifs (11) répartis dans le plan de base (PB2) selon un arrangement matriciel.

4. Dispositif lumineux (1) selon la revendication 3, dans lequel chacun des premiers motifs (11) de la pluralité de premiers motifs (11) est adjacent avec au moins l'un des autres premiers motifs (11) de la pluralité de premiers motifs (11).

5. Dispositif lumineux (1) selon la revendication 3 ou la revendication 4, dans lequel chacun des premiers motifs (11) de la pluralité de premiers motifs (11) présente une hauteur, mesurée perpendiculairement au plan de base (PB2), comprise entre 40 µm et 80 µm.

6. Dispositif lumineux (1) selon l'une quelconque des revendications 3 à 5, dans lequel chacun des premiers motifs (11) présente la forme d'une partie de sphère.

7. Dispositif lumineux (1) selon à la revendication 6, dans lequel chacun des premiers motifs (11) présente un diamètre compris entre 0.15 mm et 0.6 mm.

8. Dispositif lumineux (1) selon la revendication 6 ou la revendication 7, dans lequel la surface de l'élément optoélectronique (2), mesurée parallèlement à un plan d'extension (PE1), est comprise entre 7.5 mm² et 11.5 mm², avantageusement comprise entre 8.5 mm² et 10.5 mm², et est préférentiellement de 9.5 mm².

9. Dispositif lumineux (1) selon l'une quelconque des revendications 3 à 8, dans lequel le réseau de motifs de base (10) comprend une pluralité de deuxièmes motifs (12) répartis dans le plan de base (PB2) selon un arrangement matriciel, chacun des deuxièmes motifs (12) de la pluralité de deuxièmes motifs (12) étant intercalé entre les premiers motifs (11).

10. Dispositif lumineux (1) selon la revendication 9, dans lequel chacun des deuxièmes motifs (12) présente une hauteur, mesurée perpendiculairement au plan de base (PB2), comprise entre 4 µm et 16 µm.

11. Dispositif lumineux (1) selon la revendication 9 ou la revendication 10, dans lequel chacun des deuxièmes motifs (12) présente la forme d'une partie de sphère.

12. Dispositif lumineux (1) selon l'une quelconque des revendications 9 à 11, dans lequel chacun des deuxièmes motifs (12) présente un diamètre compris entre 120 µm et 200 µm.

13. Dispositif lumineux (1) selon l'une quelconque des revendications 1 à 12, dans lequel la lentille optique (3) est conformée de sorte à présenter deux sous-parties (14) ayant des formes tridimensionnelles identiques, agencées de part et d'autre d'une délimitation centrale (13) de la lentille optique (3) qui s'étend dans un plan longitudinal (PL2).

14. Dispositif lumineux (1) selon la revendication 13, dans lequel la lentille optique (3) est conformée de sorte à présenter un plan transversal (PT3) de symétrie coupant transversalement le plan longitudinal (PL2) et passant par un centre géométrique de la lentille optique (3).

15. Dispositif lumineux (1) selon l'une quelconque des revendications 1 à 14, lequel comporte un traitement de surface localisé dans une zone périphérique (15) de la lentille optique (3).
